# EUROPEAN PATENT SPECIFICATION

(11) **EP 2 594 923 B1**
(45) Date of publication and mention of the grant of the patent: **25.10.2017**
(21) Application number: 12192592.9
(22) Date of filing: 14.11.2012
(51) Int. Cl.: G01N 21/84, G01N 21/25, G01N 21/64, G01N 31/22, G01N 35/00, G01N 33/52, G01N 33/53

(54) **PRELIMINARY DIAGNOSTIC SYSTEM**
VORDIAGNOSTISCHES SYSTEM
SYSTÈME DE DIAGNOSE PRÉLIMINAIRE

(30) Priority: 16.11.2011 IT MI20112080
(43) Date of publication of application: 22.05.2013
(73) Proprietor: Iannone, Eugenio, 20127 Milano (IT)
(72) Inventor: Iannone, Eugenio, 20127 Milano (IT)
(74) Representative: Savi, Massimiliano

(56) References cited:
- US-A1- 2004 189 311
- US-A1- 2008 227 185
- US-A1- 2009 220 948
- US-B2- 7 391 936

## Description

The present invention relates to a preliminary diagnostic system.

Currently, the role of the primary care practitioner consists, among other things, in distinguishing whether a patient has a disease that can be dealt with by the primary care practitioner himself, with the aid of medicines available in pharmacies, or has a disease that requires the intervention of a specialist physician or treatment in a hospital.

If a primary care practitioner suspects the presence of a severe disease, he in fact prescribes to the patient a certain number of specialist diagnostic tests before directing him to a specialist or a hospital.

Currently there are several diagnostic investigation techniques of a known type for diagnosing the presence of a certain disease in a patient.

With reference in particular to the most widespread diseases, such as for example heart diseases, tumors, diabetes, respiratory pathway inflammations, hepatitis, renal diseases, several types of diagnostic technique are known which consist substantially in detecting a response signal of markers of the disease in a sample of biological liquid of the patient, such as for example blood or urine.

Diagnostic techniques of the known type for the above cited diseases generally provide for the execution of a test, or assay, that consists in introducing in a sample of biological liquid of the patient a reagent that is capable of reacting to the presence of a marker for a given disease suspected in the patient, and in then detecting the response signal of said marker, the presence of which indicates the presence of that disease. The detection of the presence of a certain marker for a certain disease is an indicator of high likelihood that the patient is affected by the suspected disease.

Such diagnostic techniques of a known type are not devoid of drawbacks, which include the fact that they have high costs and are highly specific for a single disease.

Moreover, such tests are useful if the patient is indeed affected by the suspected disease, but they are not necessary to understand that the disease is not present. Accordingly, such tests are in practice useless for most patients.

These diagnostic tests are in fact performed generally on a large number of substantially healthy subjects to reach the conclusion of a negative diagnosis.

US 7 931 936, US 2008/227185 and US 2009/220948 disclose diagnostic systems that however do not perform a test on the reagent that is to be used for the analysis of a sample.

US 2004/0189311 discloses a system and method for conducting biological assays on a sample, comprising a cartridge reader and cartridge comprising a detection chamber receiving a sample, a liquid reagent and control reagents, e.g., predetermined amounts of analytes measured in the detection chamber. The aim of the present invention is to provide a preliminary diagnostic system that solves the technical problem described above, obviates the drawbacks and overcomes the limitations of the background art, making it possible to identify in a preliminary way the cases of negative diagnosis, limiting the number of substantially healthy subjects to be subjected to specialist diagnostic tests of the known type, i.e., the number of subjects who, when subjected to specialist diagnostic tests, would receive a negative diagnosis.

Within this aim, an object of the present invention is to provide a diagnostic system that has extremely high accuracy in detecting the negative outcome of the diagnosis for a certain disease.

Another object of the present invention is to provide a preliminary diagnostic system that is capable of ascertaining whether a certain positive diagnosis is false and therefore of avoiding further specialist tests.

A further object of the present invention is to provide a preliminary diagnostic system that is simple to use.

Another object of the invention is to provide a preliminary diagnostic system that is suitable to be used by a primary care practitioner in his own study, in a pharmacy or even in a domestic environment, directly at home.

A further object of the invention is to provide a preliminary diagnostic system that is capable of giving the greatest assurances of reliability and safety in use.

Another object of the invention is to provide a preliminary diagnostic system that is easy to provide and economically competitive if compared with the background art.

This aim, as well as these and other objects that will become better apparent hereinafter, are achieved by a preliminary diagnostic system, characterized in that it comprises a reading station and at least one card comprising an integrated circuit and adapted to be read by said reading station, said integrated circuit of said card comprising a hydraulic circuit and a detection circuit, said card containing a reagent which is adapted to react to the presence of a marker of a disease, said hydraulic circuit being adapted to receive a sample of a biological liquid and to introduce said reagent in said sample, said detection circuit being adapted to detect the presence of said marker in said sample, the absence of said marker of said disease indicating the absence of said disease in said sample.

Further characteristics and advantages of the invention will become better apparent from the description of a preferred not exclusive embodiment of a preliminary diagnostic system, illustrated by way of nonlimiting example in the accompanying drawings, wherein:
Figure 1 is a schematic view of an embodiment of a preliminary diagnostic system according to the invention;
Figure 2 is a view of a first embodiment of an integrated circuit of the preliminary diagnostic system, not according to the invention;
Figure 3 is a view of a second embodiment of an integrated circuit of the preliminary diagnostic system according to the invention;
Figure 4 is a schematic view of the cross-section of a portion of the integrated circuit of Figure 2 or 3, wherein the hydraulic circuit and the detection circuit of the integrated circuit interact.

With reference to the figures, the preliminary diagnostic system, generally designated by the reference numeral 1, comprises a reading station 2, and a card 3 that comprises an integrated circuit 4. The reading station 2 is adapted to read the information produced and stored in the card 3 and to transmit it, conveniently to a system for interfacing with the user, such as advantageously a personal computer 5 or a handheld computer or other information technology device, in order to allow the user to read and/or print the information contained in the card 3.

According to the invention, the integrated circuit 4 provided in the card 3 comprises a hydraulic circuit 10 and a detection circuit 20, wherein the hydraulic circuit 10 performs the function of introducing a reagent capable of reacting with a marker for a certain disease in a sample of a biological liquid, while the detection circuit 20 is adapted to detect a response signal of said marker in the mixture of biological liquid and reagent with marker.

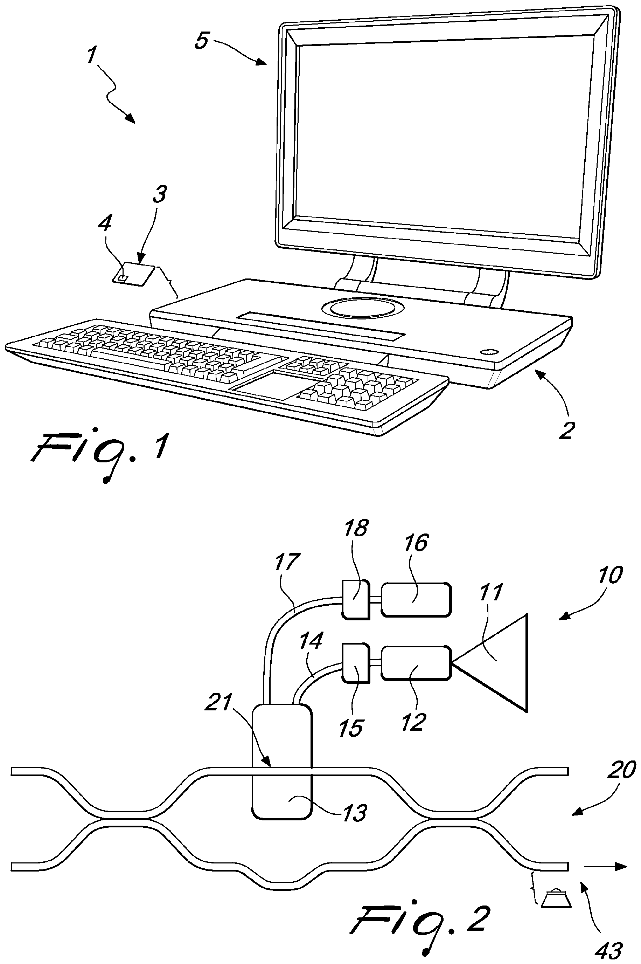

As shown by way of non-claimed example in Figure 2, the integrated circuit, also termed lab-on-chip, comprises a hydraulic circuit 10 and a detection circuit 20, which advantageously are provided in the same silicon and silicon oxide matrix.

In particular, the integrated circuit 4 is provided in a layer of silicon oxide grown on a monolithic silicon wafer.

The technology for the processing of silicon/silicon oxide advantageously allows to provide hydraulic ducts and chambers with dimensions even smaller than one micrometer and to provide, in the same silicon/silicon oxide matrix, also circuits of the optical type for the detection of disease markers.

The hydraulic circuit 10 comprises a station 11 for collecting a sample of a biological liquid, such as for example blood or urine, which is connected to the reading station 2. The collection station 11 is adapted to receive the sample of biological liquid from outside and to convey the sample into a collection chamber 12 in the card 3.

The station 11 for collecting a sample of biological liquid is advantageously accessible by the station 2 for reading by a user, so that it is possible to deposit a sample of biological liquid from the outside of the reading station 2 and so that said sample can reach the collection chamber 12.

The collection chamber 12 is connected to a reaction chamber 13 by means of a duct 14. Between the chamber 12 for collecting the sample of biological liquid and the reaction chamber 13, at the duct 14, there is a first control valve 15.

The hydraulic circuit 10 further comprises a second collection chamber 16, which is adapted to contain a reagent that is capable of reacting with a marker for a certain disease that may be present in the sample of biological liquid. A second duct 17 connects the second collection chamber 16 to the reaction chamber 13 through a second control valve 18.

The detection circuit 20 has an active portion 21 at the reaction chamber 13 of the hydraulic circuit 10, where the detection of any presence or absence of the marker in the biological fluid sample occurs. This detection circuit 20 is adapted to detect the presence of a marker for a certain disease when, in the reaction chamber 13, a reaction occurs between said marker and the reagent previously contained in the collection chamber 16. In particular, if the patient is affected by the disease of interest, the reagent interacts with a marker, producing a positive response signal. If the disease is not detected, the response signal is negative.

In an embodiment of the integrated circuit 4, the hydraulic circuit 10 comprises a second reaction chamber 30.

In the embodiment of the hydraulic circuit 10, the collection chamber 16 of the reagent comprises an output duct 33 which, downstream of a further control valve 34, forks into two ducts 17 and 31. The duct 17, by means of the valve 18, connects the collection chamber 16 of the reagent to the reaction chamber 13; the duct 31 instead connects the collection chamber 16 of the reagent to the second reaction chamber 30 by means of a valve 32.

Moreover, a valve 35 connects, by means of a duct 36, the second reaction chamber 32 to the main reaction chamber 13.

The second reaction chamber 30 contains a test reagent that is adapted to test the proper operation of the detection circuit 20 before and/or after the test on the sample of biological liquid. Since the marker is certainly present in the test reagent in very high concentrations, if said marker is detected by the detection circuit 20 this means that said detection circuit 20 is operating correctly.

The detection circuit 20 is advantageously provided in the same silicon/silicon oxide matrix in which the hydraulic circuit 10 is provided, and advantageously uses optical detection techniques, for example using an integrated interferometer of the Mach-Zehnder type. Such integrated interferometer of the Mach-Zehnder type advantageously has a high compatibility with the micro-flows that occur in the hydraulic circuit 10.

Such interferometer is advantageously suitable to detect modifications of the value of the index of refraction of the mixture of reagent and sample of biological liquid in the reaction chamber 13 if the value of the index of refraction of the mixture depends on the presence of the marker.

As an alternative, the reaction between the reagent and the marker of a disease that is present in the sample of biological fluid causes fluorescence phenomena, which can be detected by a photodiode 43 and converted into an electrical signal.

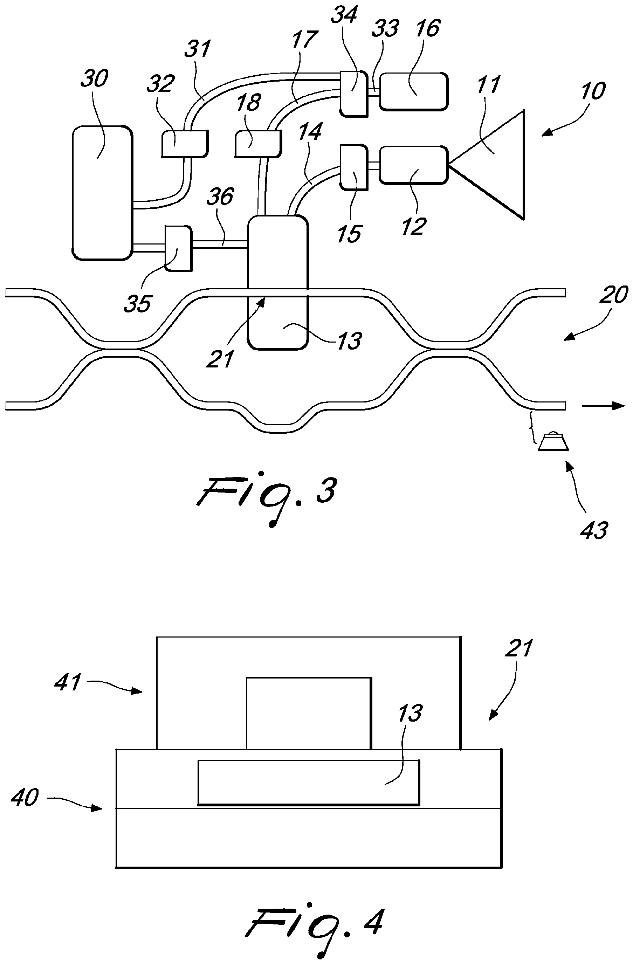

Figure 4 is a sectional view of a portion of the integrated circuit 4, provided by means of silicon/silicon oxide processing techniques. In particular, it shows the active portion 21, where the superimposition of two layers 40 and 41 of silicon/silicon oxide can be seen. The hydraulic circuit 10, comprising the reaction chambers 13 and 30, the control valves 15, 18, 32, 34, 35, the collection chambers 12 and 16 and all the hydraulic connecting ducts are provided in the lower layer 40, which has thicknesses advantageously in the range between 7 and 10 micrometers. The optical detection circuit 20 is provided in the upper layer 41, which advantageously has thicknesses in the range comprised between 5 and 7 micrometers.

The liquids, which often have high densities, flow in the micro-ducts of the hydraulic circuit 10 with laminar flow, propelled by a positive pressure generated by micro-pumps of the passive or active type. Such flow is controlled by means of the action of the valves, by way of which volumes of liquid pass from one chamber to the other in precise, accurate and repeatable quantities.

In a further embodiment, a coupling of a valve and a micro-pump between the collection station 11 and the collection chamber 12 is provided, which defines the quantity of sample of biological liquid that enters circulation in the hydraulic circuit 10.

Such micro-pumps are advantageously provided in the same matrix of silicon and silicon oxide, using silicon/silicon oxide processing techniques. Such micro-pumps are constituted advantageously by two control valves, an output valve and an intake valve, which are separated by a chamber that has an internal membrane. The deflection of such membrane inside the chamber creates changes in the pressure inside the chamber which cause the opening and closure respectively of the intake and output valves and consequently draw liquid into the chamber or expel it from said chamber.

In the reaction chamber 13, the mixture of the reagent and of the sample of biological liquid occurs by diffusion and requires times on the order of a few minutes in order to reach equilibrium.

The size of the integrated circuit 4 advantageously has values comprised in a range between 0.25 and 1 mm², advantageously allowing to provide up to 13,000 integrated circuits in a silicon wafer with a standard size of 8 inches.

The preliminary diagnostic system 1 is advantageously suitable to detect the presence or absence of markers of diseases such as, merely by way of nonlimiting example, heart diseases, tumors, diabetes, inflammations of the respiratory pathways, hepatitis and renal diseases.

Operation of the preliminary diagnostic system 1 is described hereinafter.

First of all, a sample of a biological liquid and a card 3 that is specific for a certain disease, containing a reagent suitable to interact with a marker of said disease, are made available.

The sample of biological liquid is taken from the patient and conveniently deposited in the reading station 2, which conveys it to the card 3, and in particular in a collection region 11 that can be accessed by the reading station 2. Such sample is then conveyed into the sample collection chamber 12 by means of the action of micro-pumps and in a manner that is controlled by valves.

The reagent suitable to interact with a marker of the disease is already contained in the collection chamber 16 of the card 3.

The opening of the control valves 15 and 18, with reference to the embodiment shown in particular in Figure 2, allows the passage of the sample of biological liquid and of the reagent to the main reaction chamber 13, where the reagent diffuses within the biological liquid sample, and if the marker for the disease is present a reaction occurs between the reagent and the marker, causing variations of the index of refraction of the mixture of reagent and sample.

The interferometer of the detection circuit 20 converts such variation of the index of refraction into a variation of the intensity of a light source, which is detected by a photodiode and transduced into an electrical signal.

Accordingly, it is possible to detect the presence or absence of the given marker of the given disease in the sample of biological liquid.

According to the second embodiment, shown in particular in Figure 3, there is also a test circuit adapted to ensure the proper operation of the preliminary diagnostic system. At the end of the analysis of the sample of biological fluid, the test reagent contained in the secondary reaction chamber 30, comprising high concentrations of marker, is mixed with the reagent that is present in the chamber 16 and the mixture is sent into the main reaction chamber 13, where, due to the high concentrations of the marker, an evident reaction occurs between the reagent and the marker and is appropriately detected by the detection circuit 20. Failure to detect the reaction that has occurred means that the system has not worked and the test must be repeated.

In practice it has been found that the preliminary diagnostic system according to the present invention achieves the intended aim and objects, since it allows to perform accurate tests for negative diagnosis of a certain disease.

A further advantage of the preliminary diagnostic system according to the invention resides in that it provides assurance to the primary care practitioner or in any case in a preliminary step of the diagnosis for a certain disease of reducing drastically the number of diagnoses that have a false positive outcome, therefore reducing the number of diagnostic tests of the specialist type that have a negative outcome and are not necessary.

Another advantage of the preliminary diagnostic system according to the invention resides in that the card is provided by means of silicon processing techniques, which therefore can be industrialized to produce large volumes and at limited costs.

A further advantage of the diagnostic system according to the invention resides in that it is possible to reduce drastically the number of specialist tests performed on individuals that are substantially healthy and the outcome of which would therefore be negative.

Another advantage of the preliminary diagnostic system according to the invention resides in that it is suitable for use for several types of disease.

A further advantage of the preliminary diagnostic system according to the invention resides in that it can be used easily by a primary care practitioner, by a pharmacist, or even by the patient himself in his own home.

The preliminary diagnostic system thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, maybe any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A preliminary diagnostic system (1), comprising a reading station (2) and at least one card (3) comprising an integrated circuit (4) and adapted to be read by said reading station (2), said integrated circuit (4) of said card (3) comprising a hydraulic circuit (10) and a detection circuit (20), said card (3) containing a reagent which is adapted to react to the presence of a marker of a disease, said hydraulic circuit (10) being adapted to receive a sample of a biological liquid and to introduce said reagent in said sample, said detection circuit (20) being adapted to detect the presence of said marker in said sample, the absence of said marker of said disease indicating the absence of said disease in said sample, said hydraulic circuit (10) further comprising at least one reaction chamber (13) which is connected to a collection chamber (16) for collecting said reagent through a first valve (18) and a control valve (34), is adapted to receive the sample through a second valve (15) and is adapted to contain a mixture of said sample of said biological liquid and of said reagent, wherein said hydraulic circuit (10) comprises a second reaction chamber (30) which contains a test reagent, is adapted to contain a mixture of said reagent and of a test reagent and is connected, through a third valve (32) and the control valve (34), to the collection chamber (16), said second reaction chamber (30) being also connected to said at least one reaction chamber (13) through a fourth valve (35).

2. The preliminary diagnostic system (1) according to claim 1, **characterized in that** said hydraulic circuit (10) comprises a chamber (12) for collecting said sample of said biological liquid, said chamber (12) for collecting said biological liquid being accessible by said reading station (2).

3. The preliminary diagnostic system (1) according to one or more of the preceding claims, **characterized in that** said hydraulic circuit (10) is provided in a layer of silicon oxide which is grown on a monolithic silicon wafer.

4. The preliminary diagnostic system (1) according to claim 1, **characterized in that** said detection circuit (20) comprises an active portion (21) which is adapted to interface with said at least one reaction chamber (13) of said hydraulic circuit (10) for the detection of said marker in said sample.

5. The preliminary diagnostic system (1) according to claim 4, **characterized in that** said detection circuit (20) comprises an interferometer which is adapted to detect modifications of the value of the index of refraction of said mixture or phenomena of fluorescence of said mixture in said reaction chamber (13), said value of the index of refraction or said fluorescence phenomena of said mixture depending on the presence of said marker in said sample.

6. The preliminary diagnostic system (1) according to one of the preceding claims, **characterized in that** said at least one card (3) is of the disposable type.

7. A preliminary diagnostic method, using a preliminary diagnostic system as claimed in claim 1, **characterized in that** it comprises the steps of:
- having available a sample of a biological liquid;
- inserting in said reading station (2) said card (3) containing a reagent which is adapted to interact with a marker of a disease;
- depositing said sample in a collection region (11) that can be accessed by said reading station (2), said sample mixing with said reagent in said card (3);
- detecting the presence of said marker of said disease in said sample, the absence of said marker of said disease indicating the absence of said disease in said sample.

## Patentansprüche

1. Vordiagnose-System (1), aufweisend eine Lesestation (2) und mindestens eine Karte (3), die einen integrierten Schaltkreis (4) aufweist und geeignet ist, von der Lesestation (2) gelesen zu werden, wobei der integrierte Schaltkreis (4) der Karte (3) einen hydraulischen Kreis (10) und einen Detektionskreis (20) aufweist, die Karte (3) ein Reagens enthält, das geeignet ist, auf die Anwesenheit eines Markers einer Krankheit zu reagieren, der hydraulische Kreis (10) geeignet ist, eine Probe einer biologischen Flüssigkeit aufzunehmen und das Reagens in die Probe einzubringen, der Detektionskreis (20) geeignet ist, die Anwesenheit des Markers in der Probe zu detektieren, wobei die Abwesenheit des Markers der Krankheit auf die Abwesenheit der Krankheit in der Probe hinweist, der hydraulische Kreis (10) zudem mindestens eine Reaktionskammer (13) aufweist, die mit einer Sammelkammer (16) verbunden ist, um das Reagens durch ein erstes Ventil (18) und ein Steuerventil (34) zu sammeln, und geeignet ist, die Probe durch ein zweites Ventil (15) aufzunehmen und geeignet ist, eine Mischung aus der Probe der biologischen Flüssigkeit und des Reagens aufzunehmen, wobei der hydraulische Kreis (10) eine zweite Reaktionskammer (30) aufweist, die ein Testreagens enthält und geeignet ist, eine Mischung aus dem Reagens und einem Testreagens aufzunehmen und die durch ein drittes Ventil (32) und das Steuerventil (34) mit der Sammelkammer (16) verbunden ist, wobei die zweite Reaktionskammer (30) durch ein viertes Ventil (35) ebenfalls mit der mindestens einen Reaktionskammer (13) verbunden ist.

2. Vordiagnose-System (1) gemäß Anspruch 1, **dadurch gekennzeichnet, dass** der hydraulische Kreis (10) eine Kammer (12) zum Sammeln der Probe der biologischen Flüssigkeit aufweist und die Kammer (12) zum Sammeln der biologischen Flüssigkeit für die Lesestation (2) zugänglich ist.

3. Vordiagnose-System (1) gemäß einem oder mehreren der vorigen Ansprüche, **dadurch gekennzeichnet, dass** der hydraulische Kreis (10) in einer Schicht aus Silikonoxid, die auf einen monolithischen Silikonwafer aufgezogen ist, bereitgestellt wird.

4. Vordiagnose-System (1) gemäß Anspruch 1, **dadurch gekennzeichnet, dass** der Detektionskreis (20) einen aktiven Bereich (21) aufweist, der geeignet ist, an die mindestens eine Reaktionskammer (13) des hydraulischen Kreises (10) angekoppelt zu werden, um den Marker in der Probe zu detektieren.

5. Vordiagnose-System (1) gemäß Anspruch 4, **dadurch gekennzeichnet, dass** der Detektionskreis (20) ein Interferometer aufweist, das geeignet ist, Veränderungen des Wertes des Brechungsindex der Mischung oder Fluoreszenzerscheinungen der Mischung, in Abhängigkeit von der Anwesenheit des Markers in der Probe, zu detektieren.

6. Vordiagnose-System (1) gemäß einem der vorigen Ansprüche, **dadurch gekennzeichnet, dass** die mindestens eine Karte (3) eine Wegwerfkarte ist.

7. Vordiagnose-Verfahren unter Verwendung eines Vordiagnose-Systems gemäß Anspruch 1, **dadurch gekennzeichnet, dass** es folgende Schritte aufweist:
- Verfügbarkeit einer Probe einer biologischen Flüssigkeit;
- Einsetzen der Karte (3) in die Lesestation (2), welche Karte ein Reagens enthält, das geeignet ist, mit einem Marker einer Krankheit zu interagieren,;
- Ablegen der Probe in einem Sammelbereich (11), der für die Lesestation (2) zugänglich ist, Mischen der Probe mit dem Reagens in der Karte (3);
- Detektion der Anwesenheit des Markers der Krankheit in der Probe, wobei die Abwesenheit des Markers der Krankheit auf die Abwesenheit der Krankheit in der Probe hinweist.

## Revendications

1. Système de diagnostic préliminaire (1), comprenant un poste de lecture (2) et au moins une carte (3) comprenant un circuit intégré (4) et appropriée pour être lue par ledit poste de lecture (2), ledit circuit intégré (4) de ladite carte (3) comprenant un circuit hydraulique (10) et un circuit de détection (20), ladite carte (3) contenant un réactif qui est approprié pour réagir en la présence d'un marqueur d'une maladie, ledit circuit hydraulique (10) étant approprié pour recevoir un échantillon d'un liquide biologique et pour introduire ledit réactif dans ledit échantillon, ledit circuit de détection (20) étant approprié pour détecter la présence dudit marqueur dans ledit échantillon, l'absence dudit marqueur de ladite maladie indiquant l'absence de ladite maladie dans ledit échantillon, ledit circuit hydraulique (10) comprenant en outre au moins une chambre de réaction (13) qui est reliée à une chambre de collecte (16) pour recueillir ledit réactif par l'intermédiaire d'une première soupape (18) et d'une soupape de commande (34), est appropriée pour recevoir l'échantillon par l'intermédiaire d'une deuxième soupape (15) et est appropriée pour contenir un mélange dudit échantillon dudit liquide biologique et dudit réactif, dans lequel ledit circuit hydraulique (10) comprend une seconde chambre de réaction (30) qui contient un réactif de test, est appropriée pour contenir un mélange dudit réactif et d'un réactif de test et est reliée, par l'intermédiaire d'une troisième soupape (32) et de la soupape de commande (34) à la chambre de collecte (16), ladite seconde chambre de réaction (30) étant également reliée à ladite au moins une chambre de réaction (13) par l'intermédiaire d'une quatrième soupape (35).

2. Système de diagnostic préliminaire (1) selon la revendication 1, **caractérisé en ce que** ledit circuit hydraulique (10) comprend une chambre (12) pour recueillir ledit échantillon dudit liquide biologique, ladite chambre (12) pour recueillir ledit liquide biologique étant accessible par ledit poste de lecture (2).

3. Système de diagnostic préliminaire (1) selon une ou plusieurs des revendications précédentes, **caractérisé en ce que** ledit circuit hydraulique (10) est fourni sur une couche d'oxyde de silicium qui est développée sur une tranche de silicium monolithique.

4. Système de diagnostic préliminaire (1) selon la revendication 1, **caractérisé en ce que** ledit circuit de détection (20) comprend une partie active (21) qui est appropriée pour être en interface avec ladite au moins une chambre de réaction (13) dudit circuit hydraulique (10) pour la détection dudit marqueur dans ledit échantillon.

5. Système de diagnostic préliminaire (1) selon la revendication 4, **caractérisé en ce que** ledit circuit de détection (20) comprend un interféromètre qui est approprié pour détecter des modifications de la valeur de l'indice de réfraction dudit mélange ou des phénomènes de fluorescence dudit mélange dans ladite chambre de réaction (13), ladite valeur de l'indice de réfraction ou lesdits phénomènes de fluorescence dudit mélange dépendant de la présence dudit marqueur dans ledit échantillon.

6. Système de diagnostic préliminaire (1) selon l'une des revendications précédentes, **caractérisé en ce que** ladite au moins une carte (3) est de type jetable.

7. Procédé de diagnostic préliminaire, mettant en oeuvre un système de diagnostic préliminaire selon la revendication 1, **caractérisé en ce qu'**il comprend les étapes consistant à :
- avoir à disposition un échantillon d'un liquide biologique ;
- introduire dans ledit poste de lecture (2), ladite carte (3) contenant un réactif qui est approprié pour interagir avec un marqueur d'une maladie ;
- déposer ledit échantillon dans une région de collecte (11) accessible par ledit poste de lecture (2), ledit échantillon se mélangeant audit réactif dans ladite carte (3) ;
- détecter la présence dudit marqueur de ladite maladie dans ledit échantillon, l'absence dudit marqueur de ladite maladie indiquant l'absence de ladite maladie dans ledit échantillon.
